**Europäisches Patentamt**

**European Patent Office**

**Office européen des brevets**

(19)

(11) **EP 1 329 969 A2**

(12) **EUROPÄISCHE PATENTANMELDUNG**

(43) Veröffentlichungstag:
**23.07.2003 Patentblatt 2003/30**

(51) Int Cl.7: **H01M 8/02**

(21) Anmeldenummer: **03000949.2**

(22) Anmeldetag: **16.01.2003**

(84) Benannte Vertragsstaaten:
**AT BE BG CH CY CZ DE DK EE ES FI FR GB GR HU IE IT LI LU MC NL PT SE SI SK TR**
Benannte Erstreckungsstaaten:
**AL LT LV MK RO**

(30) Priorität: **17.01.2002 DE 10201510**

(71) Anmelder: **Behr GmbH & Co.**
**70469 Stuttgart (DE)**

(72) Erfinder:
• **Eitel, Jochen, Dipl-Ing.**
**73266 Bissingen (DE)**

• **Kaiser, Wolfgang**
**79848 Bonndorf (DE)**
• **Pfender, Conrad, Dr.**
**74354 Besigheim (DE)**

(74) Vertreter: **Grauel, Andreas, Dr.**
**BEHR GmbH & Co. KG,**
**Intellectual Property,**
**G-IP,**
**Mauserstrasse 3**
**70469 Stuttgart (DE)**

(54) **Stromabnehmer- oder Bipolarplatte für eine Polymerelektrolyt-Brennstoffzelle**

(57) Die Erfindung betrifft eine Stromabnehmer- oder Bipolarplatte (7) für eine Polymerelektrolyt-Brennstoffzelle (1) mit einer Verteilerstruktur (8), welche mindestens einen Kanal (11) und mindestens einmal eine Richtungsänderung (12) von mindestens 90° aufweist, sowie eine entsprechende Polymerelktrolyt-Brennstoffzelle (1).

Fig.2

EP 1 329 969 A2

**Beschreibung**

Die Erfindung betrifft eine Stromabnehmer- oder Bipolarplatte für eine Polymerelektrolyt-Brennstoffzelle gemäß dem Oberbegriff des Anspruches 1 sowie eine Polymerelektrolyt-Brennstoffzelle gemäß dem Oberbegriff des Anspruches 14.

Für die Erzeugung von elektrischer Energie durch die Zuführung von Wasserstoff und Sauerstoff können Polymerelektrolyt-Brennstoffzellen verwendet werden. Bei diesen hängt der Wirkungsgrad für die Umwandlung von chemischer in elektrische Energie und somit die spezifische Leistung der Brennstoffzellen unter anderem von der Ausführung der Fluid-Verteilerstrukturen der die Membran-Elektroden-Anordnung kontaktierenden Bipolarplatten ab.

Der Aufbau einer herkömmlichen Polymerelektrolyt-Brennstoffzelle ist bspw. in der DE 197 13 250 A1 beschrieben. Eine derartige Polymerelektrolyt-Brennstoffzelle weist eine Polymerelektrolyt-Membran, Elektrodenschichten, wobei zwischen zwei Elektrodenschichten eine Polymerelektrolyt-Membran angeordnet ist, und an die Elektrodenschichten angrenzende Trennplatten (Stromabnehmer- oder Bipolarplatten) mit Kanälen und Kühlräumen auf. Eine derartige Polymerelektrolyt-Brennstoffzelle lässt jedoch noch Wünsche offen.

Ausgehend von diesem Stand der Technik ist es Aufgabe der Erfindung, eine verbesserte Stromabnehmer- oder Bipolarplatte zur Verfügung zu stellen.

Diese Aufgabe wird gelöst durch eine Stromabnehmer- oder Bipolarplatte mit den Merkmalen des Anspruches 1 sowie durch eine Polymerelektrolyt-Brennstoffzelle mit den Merkmalen des Anspruches 14. Vorteilhafte Ausgestaltungen sind Gegenstand der Unteransprüche.

Erfindungsgemäß wird eine Stromabnehmer- oder Bipolarplatte für eine Polymerelektrolyt-Brennstoffzelle mit einer Verteilerstruktur (Fluid-Verteiler oder Kühlfluid-Verteilerstruktur) vorgesehen, welche mindestens einen Kanal mit mindestens einer Richtungsänderung von mindestens 90° aufweist. Vorzugsweise verläuft der Kanal mäanderförmig, wobei der Kanal zwei bis sechs mal seine Richtung um 180° ändert.

Vorzugsweise weist die Verteilerstruktur mehrere parallel zueinander angeordnete Kanäle, insbesondere drei Kanäle, auf.

Gemäß einer bevorzugten Variante bildet die Verteilerstruktur eine Kühlfluid-Verteilerstruktur.

Vorzugsweise weist der Kanal einen im wesentlichen viereckigen, insbesondere einen rechteckigen oder trapezförmigen Querschnitt auf. Hierbei können die Kanten in einem Radius oder einer Fase verlaufen.

Im folgenden wird die Erfindung anhand eines Ausführungsbeispiels unter Bezugnahme auf die Zeichnung im einzelnen erläutert. In der Zeichnung zeigen:

Fig. 1 einen Schnitt durch einen Teil einer Polymerelektrolyt-Brennstoffzelle gemäß dem Ausführungsbeispiel,

Fig. 2 eine schematische Ansicht einer Bipolarplatte,

Fig. 3 eine schematische Schnittdarstellung einer anodenseitigen Fluid-Verteilerstruktur,

Fig. 4 eine schematische Schnittdarstellung einer kathodenseitigen Fluid-Verteilerstruktur, und

Fig. 5 eine schematische Schnittdarstellung einer Kühlfluid-Verteilerstruktur.

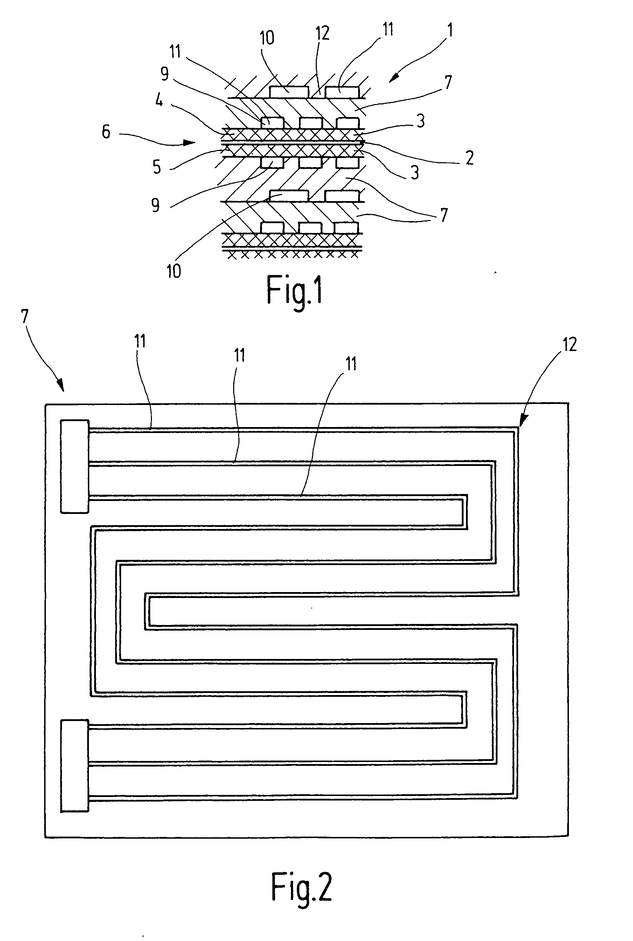

Eine Polymerelektrolyt-Brennstoffzelle 1 weist eine Polymerelektrolyt-Membran 2 auf, die zwischen zwei Elektroden 3, d.h. zwischen einer Anode 4 und einer Kathode 5, angeordnet ist. Hierbei bilden die beiden Elektroden 3 und die Polymerelektrolyt-Membran 2 ein Zellelement 6. Jedes Zellelement 6 ist von benachbarten Zellelementen 6 mittels Bipolarplatten 7 getrennt. Diese Bipolarplatten 7 weisen auf einer Seite Verteilerstrukturen 8, d.h. Fluid-Verteilerstrukturen 9 oder Kühlfluid-Verteilerstrukturen 10, auf. Die Verteilerstrukturen 8 werden durch Kanäle 11 gebildet, wobei gemäß dem Ausführungsbeispiel drei Kanäle 11 mäanderförmig und parallel zueinander verlaufen (vgl. Fig. 2). Dabei wechseln die Kanäle 11 mehrfach die Richtung um 90°, wobei jeweils zwei Richtungsänderungen 12 um 90° in eine Drehrichtung aufeinander folgen und näher beieinander liegen als zwei Richtungsänderungen 12 um 90° in unterschiedliche Drehrichtungen. Gemäß dem Ausführungsbeispiel erfolgt eine dreimalige Richtungsumkehr, d.h. es gibt sechs Richtungsänderungen 12 der Kanäle 11.

Die in Fig. 2 dargestellte Verteilerstruktur 8 stimmt für anoden- und kathodenseitige Fluid-Verteilerstrukturen 9 und Kühlfluid-Verteilerstrukturen 10 im wesentlichen überein. Die einzelnen Verteilerstrukturen 8 unterscheiden sich hauptsächlich durch die Abmessungen des Querschnitts der Kanäle 11. Die Kanäle 11 gemäß dem Ausführungsbeispiel weisen einen rechteckigen Querschnitt auf, jedoch sind auch Varianten hierzu möglich.

Die Abmessungen des Querschnitts der Kanäle 11 sowie der zwischen den Kanälen 11 angeordneten Stege 13 lassen sich näherungsweise folgendermaßen eingrenzen:

$$a = f - 2 \times (u + v)$$

$$b = e - h$$

$$c = d + 2 \times (u + v)$$

$$g = f - 2 \times u$$

$$i = d + 2 \times u$$

Hierbei sind:

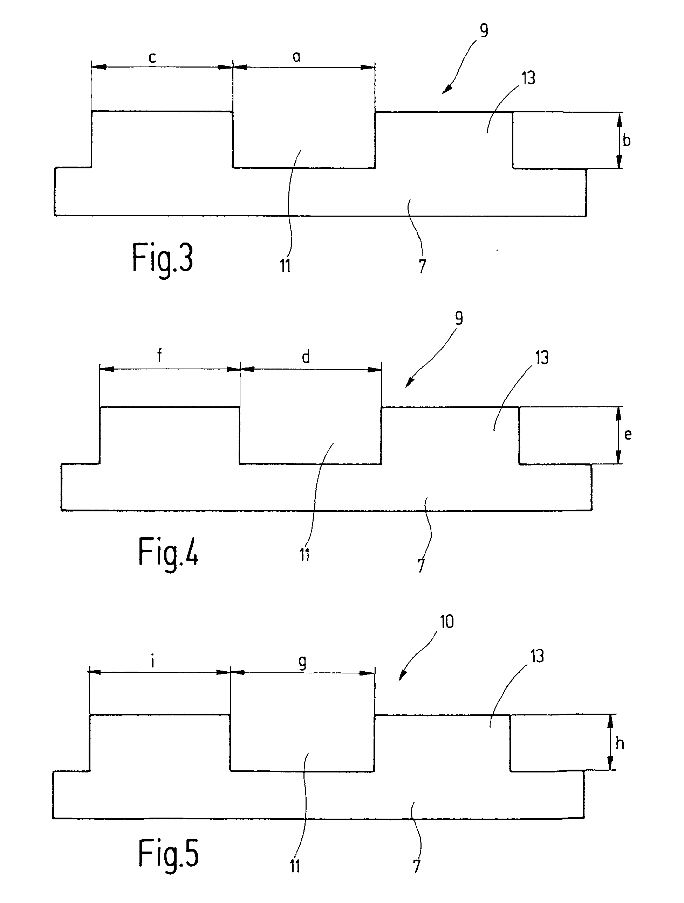

a = anodenseitige Kanalbreite
b = anodenseitige Steghöhe
c = anodenseitige Stegbreite
d = kathodenseitige Kanalbreite, wobei d im Intervall von 0,5 mm bis 5 mm liegt
e = kathodenseitige Steghöhe, wobei e im Intervall von 0,1 mm bis 2 mm liegt
f = kathodenseitige Stegbreite, wobei f im Intervall von 0,5 mm bis 5 mm liegt
g = Kühlfluid-Verteiler-Kanalbreite
h = Kühlfluid-Verteiler-Steghöhe, wobei h im Intervall von 0,05 mm bis 0,3 mm liegt
i = Kühlfluid-Verteiler-Stegbreite
u, v = Geometriefaktoren, wobei u, v im Intervall von 0,05 mm bis 0,25 mm liegen
(vgl. Fig. 3 bis 5)

Dies ergibt mit d = 2 mm, e = 1 mm, f = 2 mm, h = 0,1 mm, u = 0,1 und v = 0,2 folgende Grenzwerte:

$$a = f - 2 \times (u + v) = 1,4 \text{ mm}$$

$$b = e - h = 0,9 \text{ mm}$$

$$c = d + 2 \times (u + v) = 2,6 \text{ mm}$$

$$g = f - 2 \times u = 1,8 \text{ mm}$$

$$i = d + 2 \times u = 2,2 \text{ mm}$$

Somit können bspw. folgende Abmessungen festgelegt werden:

a = 1,0 mm
b = 0,8 mm
c = 2,0 mm
g = 1,5 mm
i = 2,5 mm

Weisen die Kanäle einen trapezförmigen oder anderen Querschnitt auf, so wird jeweils die mittlere Abmessung verwendet. Entsprechendes gilt auch bei einer Querschnittsänderung über den Verlauf des Kanals.

**Bezugszeichenliste**

1 Polymerelektrolyt-Brennstoffzelle
2 Polymerelektrolyt-Membran
3 Elektrode
4 Anode
5 Kathode
6 Zellelement
7 Bipolarplatte
8 Verteilerstruktur
9 Fluid-Verteilerstruktur
10 Kühlfluid-Verteilerstruktur
11 Kanal
12 Richtungsänderung
13 Steg

**Patentansprüche**

1. Stromabnehmer- oder Bipolarplatte für eine Polymerelektrolyt-Brennstoffzelle (1) mit einer Verteilerstruktur (8), welche mindestens einen Kanal (11) aufweist, **dadurch gekennzeichnet, dass** der Kanal (11) mindestens einmal eine Richtungsänderung (12) von mindestens 90° aufweist.

2. Stromabnehmer- oder Bipolarplatte nach Anspruch 1, **dadurch gekennzeichnet, dass** der Kanal (11) einen mäanderförmigen Verlauf aufweist.

3. Stromabnehmer- oder Bipolarplatte nach einem der vorstehenden Ansprüche, **dadurch gekennzeichnet, dass** mehrere parallel zueinander angeordnete Kanäle (11) vorgesehen sind.

4. Stromabnehmer- oder Bipolarplatte nach einem der vorstehenden Ansprüche, **dadurch gekennzeichnet, dass** die Verteilerstruktur (8) eine Kühlfluid-Verteilerstruktur (10) aufweist.

5. Stromabnehmer- oder Bipolarplatte nach einem der vorstehenden Ansprüche, **dadurch gekennzeichnet, dass** der Kanal (11) einen im wesentlichen viereckigen, insbesondere einen rechteckigen oder trapezförmigen Querschnitt aufweist.

6. Stromabnehmer- oder Bipolarplatte nach einem der vorstehenden Ansprüche, **dadurch gekennzeichnet, dass** die anodenseitige mittlere Kanalbreite (a) kleiner oder gleich der kathodenseitigen mittleren Stegbreite (f) abzüglich eines Faktors ist, welcher sich aus der zweifachen Summe zweier Geometriefaktoren (u und v) ergibt, wobei die Geometriefaktoren (u bzw. v) größer oder gleich 0,05mm und kleiner oder gleich 0,25 mm ist.

**7.** Stromabnehmer- oder Bipolarplatte nach einem der vorstehenden Ansprüche, **dadurch gekennzeichnet, dass** die anodenseitige mittlere Steghöhe (b) kleiner oder gleich der Differenz der kathodenseitigen mittleren Steghöhe (e) und der mittleren Steghöhe (h) der Kühlfluid-Verteilerstruktur ist, wobei die mittlere Steghöhe (h) größer oder gleich 0,05 mm und kleiner oder gleich 0,3 mm ist.

**8.** Stromabnehmer- oder Bipolarplatte nach einem der vorstehenden Ansprüche, **dadurch gekennzeichnet, dass** die anodenseitige mittlere Stegbreite (c) kleiner oder gleich der mittleren kathodenseitigen Kanalbreite (d) abzüglich eines Faktors ist, welcher sich aus der zweifachen Summe zweier Geometriefaktoren (u und v) ergibt, wobei die Geometriefaktoren (u bzw. v) größer oder gleich 0,05mm und kleiner oder gleich 0,25 mm ist.

**9.** Stromabnehmer- oder Bipolarplatte nach einem der vorstehenden Ansprüche, **dadurch gekennzeichnet, dass** die mittlere Kühlfluid-Verteiler-Kanalbreite (g) kleiner oder gleich der kathodenseitigen mittleren Stegbreite (f) abzüglich eines Faktors ist, welcher sich aus der zweifachen Summe eines Geometriefaktors (u) ergibt, wobei der Geometriefaktor (u) größer oder gleich 0,05 mm und kleiner oder gleich 0,25 mm ist.

**10.** Stromabnehmer- oder Bipolarplatte nach einem der vorstehenden Ansprüche, **dadurch gekennzeichnet, dass** die mittlere Kühlfluid-Verteiler-Stegbreite (i) größer oder gleich der kathodenseitigen mittleren Kanalbreite (d) zuzüglich eines Faktors ist, welcher sich aus der zweifachen Summe eines Geometriefaktors (u) ergibt, wobei der Geometriefaktor (u) größer oder gleich 0,05 mm und kleiner oder gleich 0,25 mm ist.

**11.** Stromabnehmer- oder Bipolarplatte nach einem der vorstehenden Ansprüche, **dadurch gekennzeichnet, dass** die kathodenseitige mittlere Steghöhe (e) größer oder gleich 0,1mm und kleiner oder gleich 0,2 mm ist.

**12.** Stromabnehmer- oder Bipolarplatte nach einem der vorstehenden Ansprüche, **dadurch gekennzeichnet, dass** die kathodenseitige mittlere Kanalbreite (d) größer oder gleich 0,5mm und kleiner oder gleich 5 mm ist.

**13.** Stromabnehmer- oder Bipolarplatte nach einem der vorstehenden Ansprüche, **dadurch gekennzeichnet, dass** die kathodenseitige mittlere Stegbreite (f) größer oder gleich 0,5 mm und kleiner oder gleich 5 mm ist.

**14.** Polymerelektrolyt-Brennstoffzelle mit mindestens einem Zellelement (6), welches eine Polymerelektrolyt-Membran (2) und zwei Elektroden (3) aufweist, **gekennzeichnet durch** eine oder mehrere Stromabnehmeroder Bipolarplatten (7) nach einem der Ansprüche 1 bis 13.

Fig.1

Fig.2

Fig.3

Fig.4

Fig.5